# EUROPEAN PATENT APPLICATION

(11) **EP 2 600 048 A1**
(43) Date of publication of application: **05.06.2013**
(21) Application number: 11191217.6
(22) Date of filing: 29.11.2011
(51) Int. Cl.: F16L 13/14

(54) **Crimp connection arrangement for pressurised pipes**

(71) Applicant: Eaton Germany GmbH, 76532 Baden-Baden (DE)
(72) Inventor: Altenrath, Joerg, 53797 Lohmar (DE)
(74) Representative: Leadbetter, Benedict

(57) **Abstract**

A crimp connection arrangement for pressurised pipes with a compression sleeve and a pipe, wherein an end piece of the pipe is insertable into the compression sleeve and wherein by an application of a force to a pressing portion of the compression sleeve, a connection is achievable between the compression sleeve and the end piece of the pipe.

## Description

The invention relates to a crimp connection arrangement for pressurised pipes with a compression sleeve and a pipe, wherein an end piece of the pipe is insertable into the compression sleeve and wherein by an application of a force to a pressing portion of the compression sleeve, a connection is achievable between the compression sleeve and the end piece of the pipe.

In known compression connections, as they are, for example, described in US Patent 4 328 982, the compression sleeve has an inner serration, which enters due to the force applied for producing the connection, the outer wall of the pipe. Thus, different and even conflicting material requirements for the respective portions of the compression sleeve result. The tubular outer portion of the compression sleeve, which is acted upon by the force, has to be deformed and requires a ductile material. After the pressing, the pipe as well as the compression sleeve relax according to the elastic deformation portion. To produce a radial pre-biasing between the compression sleeve and the pipe, the elastic relaxation of the compression sleeve has to be smaller than the elastic relaxation of the pipe. This can be achieved by a compression sleeve material of lower stiffness compared to the pipe material. However, for the serration of the compression sleeve, rather a material of high stiffness and hardness is required, to ensure the penetration into the pipe material. A disadvantage of the State of the Art results from this inconsistency.

The object of the invention is, to propose a crimp connection arrangement, which overcomes the described disadvantage of the State of the Art.

The object is met by a crimp connection arrangement according to claim 1. In the dependent claims, advantageous and preferred embodiments are described.

The crimp connection arrangement according to the invention for pressurised pipes is provided to produce a compression connection between a compression sleeve and a pipe, wherein an end piece of the pipe is insertable into the compression sleeve and a connection can be produced between the compression sleeve and the end piece of the pipe by the application of a force on a pressing portion of the compression sleeve. In this case, the connection is especially partially form-fitting and partially force-fitting. The external force application is achieved generally directed radially inwards and is also designated as compressing.

According to the invention, a separate, sleeve-like retaining element is provided between the compression sleeve and the end piece of the pipe, wherein the retaining element is made from a material with greater hardness than the compression sleeve and than the pipe. The retaining element is provided for penetrating the inner surface of the compression sleeve and the outer surface of the pipe by the force application, to produce the form- and/or force-fitting connection. The separation of the separate retaining element from the compression sleeve according to the invention solves the above described contradicting material requirements. For example, an inner diameter of the compression sleeve can, advantageously, be generally constant across the pressing portion; thus, the compression sleeve has a smooth-walled bore. The retaining element is described according to the invention as sleeve-like, as the retaining element has a diameter, which is larger than the outer diameter of the pipe and smaller than the inner diameter of the compression sleeve, so that the retaining element can be arranged like a sleeve between the pipe and the compression sleeve. The retaining element according to the invention can, however, differ from a sleeve in respect of the structure and the shape, to ensure, that the retaining element is reducible in its diameter at least portion-wise by means of a force application onto the pressing portion.

Thus, it can, advantageously, be achieved, that the retaining element is deformable in its sleeve-like shape, but because of its higher stiffness, compared to the pipe and the compression sleeve, penetrates the same.

Preferably, the retaining element has a shape, which, compared to a sleeve, has a lower stability against the force application onto the pressing portion. A preferred embodiment of the crimp connection arrangement provides, that the retaining element has the shape of a coil and, thus, corresponds to a helical spring or a spiral coiled spring. Especially, it is preferred, that the retaining element is made from spring steel. The spiral coiled spring can, advantageously, easily be compressed in its coil diameter by the force application, wherein, practically, the coil windings cannot be deformed because of the higher material hardness, but penetrate the pipe and the compression sleeve.

Furthermore, the coil has, preferably, a winding cross-section, which corresponds to a circular cross-section. Alternatively, the winding cross-section can have a cross-section with edges, especially a rhombic cross-section, to facilitate the penetration of the coil windings into the pipe and into the compression sleeve.

Furthermore, the compression sleeve has, preferably, at the side where the pipe is inserted a portion, which tapers conically in the direction to the pipe. Thus, the compression sleeve and the retaining element are compressed less strongly at the pipe-sided end, so that the retaining element penetrates into the pipe to a lesser extent, whereby a notching effect is prevented in this area. The conical portion can be arranged internally and/or externally on the pipe-sided end of the compression sleeve. Without a conical portion, a non-smooth or partial pressing would be necessary, to ensure the same result of a reduced notching effect at the transition of the compression sleeve to the pipe.

Advantageously, the coil can have at one or both ends closed end windings, whereby a closed abutment is formed, against which, for example, a sealing ring can abut. Preferably, the side of the coil facing a sealing element is closed and is ground.

A further preferred embodiment of the crimp connection arrangement provides, that the retaining element has the shape of a sleeve made from wire mesh. Also this shape is advantageously deformed by the force application such, that the diameter of the retaining element is reduced. Preferably, a wire, forming the wire mesh, has especially a circular cross-section. Meshes with deviating cross-section are also possible, however, comparably cumbersome in the manufacture.

A further preferred embodiment of the crimp connection arrangement provides, that a sealing element is connected to the retaining element. Furthermore, the retaining element can, advantageously, be pre-assembled in the compression sleeve. The outer diameter of the retaining element is, preferably, slightly larger than the inner diameter of the compression sleeve, a so-called interference fit. Thus, the retaining element can be pre-assembled with the compression sleeve to form one component, for example by means of axial pressing of the retaining element into the compression sleeve. When the retaining element is pre-assembled with the compression sleeve, the sealing element can advantageously be clamped axially between the compression sleeve and the retaining element. In this preferred embodiment it is not necessary, that the sealing element is connected to the retaining element.

Besides the improvement of the strength of the connection, the crimp connection arrangement according to the invention has further the advantage, that the compression sleeve is less cumbersome to manufacture with a smooth-walled bore and without different hardness portions. The retaining element, itself, can, advantageously, be manufactured as a simple standard component.

Now following, the invention is described in detail by using an embodiment shown in the drawings, wherein the description is only exemplary and does not limit the general inventive idea.

It shows
- Fig. 1: a sectional view of a crimp connection arrangement according to the invention in a non-compressed condition,
- Fig. 2: a detail of Fig. 1,
- Fig. 3: the crimp connection arrangement according to the invention of Fig. 1 in the compressed condition,
- Figures 4 and 5: a detail of Fig. 3, respectively,
- Fig. 6: an embodiment of a retaining element of the crimp connection arrangement according to the invention of Fig. 1.

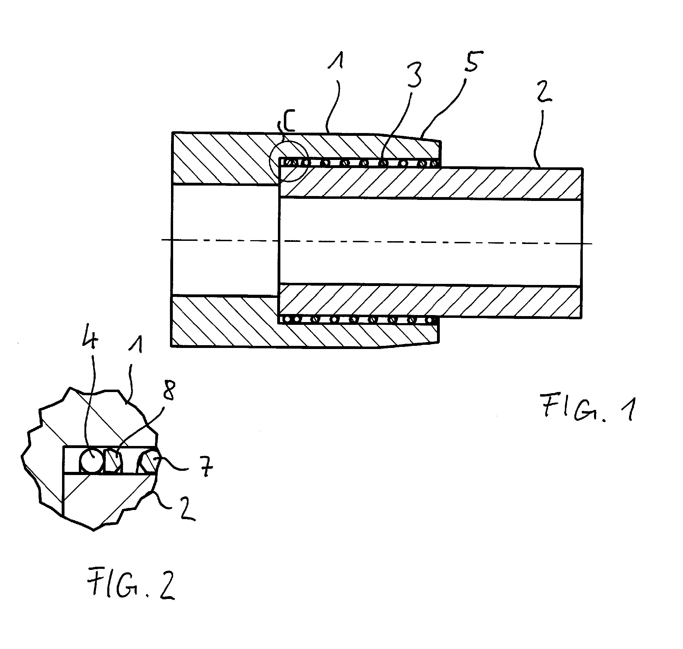

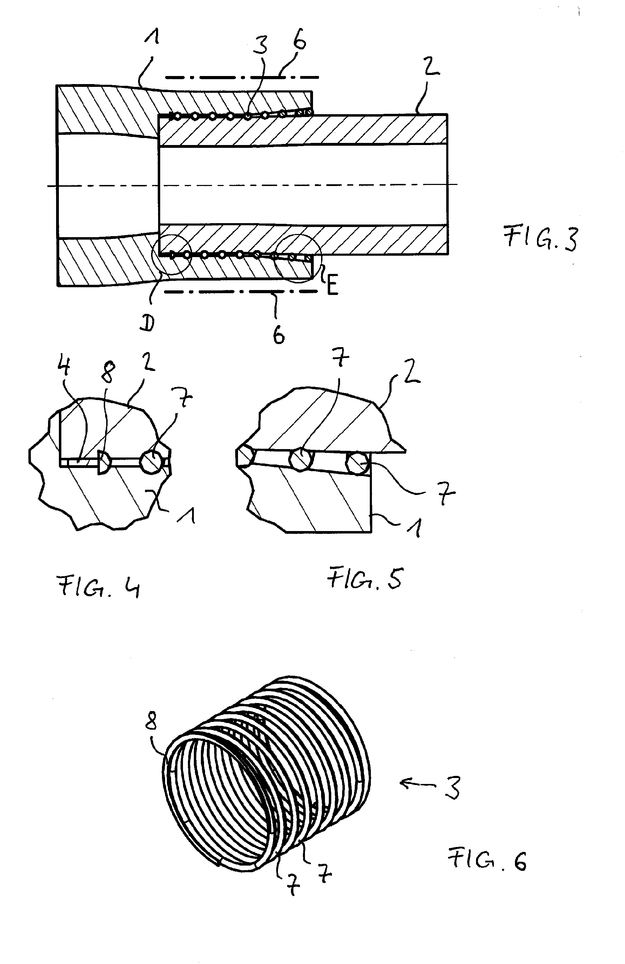

In Fig. 1 an embodiment of the crimp connection arrangement according to the invention is visible in a sectional view. The non-compressed condition is shown, i.e. before an external force application compresses the pressing portion 6 (see Fig. 3). A pipe 2 is inserted up to an abutment into a compression sleeve 1, wherein an abutment is, advantageously, not necessary in the crimp connection arrangement according to the invention. Between the compression sleeve 1 and the pipe 2, a retaining element 3 is arranged, which can be described as sleeve-like, as it has a diameter, which enables, that the retaining element 3 is arranged between the pipe 2 and the compression sleeve 1. However, the retaining element 3 has no closed sleeve shape, but individual windings 7, which are described later in connection with Fig. 6. On the side of the retaining element 3, facing the compression sleeve 1, a sealing element 4 is arranged. The pipe-sided end of the compression sleeve is flattened by an outer cone 5, to reduce the compression in this area, which is further described in reference to Figures 3 and 5.

In Fig. 2, a detail, designated in Fig. 1 with the reference numeral C, is shown enlarged. The windings 7 of the coil-like retaining element 3 have visibly a noncircular cross-section. The rectangular, especially rhombic cross-section facilitates later the penetration of the retaining element 3 into the surface of the pipe 2 and of the compression sleeve 1. The winding 7 neighbouring directly the compression sleeve 1 is designated as the end winding 8. This is, preferably, flattened and especially ground and, thus, forms an abutment face for the seal 4, which seal 4 is preferably made from a thermoplast and which can, also, be connected to the end winding, for example, by means of vulcanising or bonding.

Fig. 3 shows the embodiment of the crimp connection arrangement according to the invention of Fig. 1, however after the compression. The pressing portion 6, which is effected by the force application from the outside of the compression sleeve 1, is indicated by lines. Compared to the condition, shown in Fig. 1, the diameter of the compression sleeve 1 and of the pipe 3 is reduced by the pressing. Furthermore, the radial distance between the compression sleeve 1 and the pipe 2 is distinctly reduced, so that the retaining element 3 has entered the outer surface of the pipe 2 as well as the inner surface of the compression sleeve 1, as the retaining element 3 is made according to the invention from a harder material than the compression sleeve 1 and the pipe 2. By means of the shape of the retaining element 3, in this case as a coil, the retaining element 3 has characteristics of a spiral coiled spring, i.e. can be deformed in its diameter during the compression. An elastic return of the spiral coiled spring 3 into the original shape is not possible because of the plastic deformation of the compression sleeve 1. Thus, a permanent form- and/or force-fitting connection is achieved between the pipe 2 and the compression sleeve 1.

Fig. 4 shows enlarged a detail of Fig. 3 designated with D. The closed and ground end winding 8, as well as a further winding 7 of the retaining element 3 have visibly penetrated the material of the pipe 2 and of the compression sleeve 1, without essentially being deformed itself. Directly abutting the end winding 8, the seal 4, which is now considerably deformed, is visible.

With reference to Fig. 5, the effect of the outer cone 4 of Fig. 1 is described. In Fig. 5, the detail of Fig. 3, designated with E, is shown enlarged. In the area of the outer cone 5, the compression sleeve 1 is compressed less strongly onto the pipe 2 by the force application during the compression, so that the windings 7 of the retaining element 3 have entered less deeply the pipe 2 and the compression sleeve 1, and i.e. so much less deeply, the closer the respective coil 7 is arranged on the pipe-sided end of the retaining element 3. Thus, it is, advantageously, achieved, that the pipe 2 is only clamped in the pipe-sided end of the compression sleeve 1 by the pressing procedure, so that a notching effect by the entered windings 7 of the retaining element 3, which would weaken the strength of the pipe 2, is prevented in this area.

In Fig. 6, the retaining element 3 is shown on its own in a perspective view, by means of which the shape of a spiral coiled spring with closed end windings 8 is visible. Alternatively also a sleeve-like shape of the retaining element, made from a wire mesh, can be used.

### Reference numerals list

- 1: compression sleeve
- 2: pipe
- 3: retaining element
- 4: sealing element
- 5: outer cone
- 6: pressing portion
- 7: winding
- 8: end winding
- C, D, E: detail

## Claims

1. Crimp connection arrangement for pressurised pipes with a compression sleeve (1) and a pipe (2), wherein an end piece of the pipe is insertable into the compression sleeve and wherein by a force application onto a pressing portion (6) of the compression sleeve, a connection is achievable between the compression sleeve and the end piece of the pipe,
**characterised in**
**that** a separate, sleeve-like retaining element (3) is provided between the compression sleeve (1) and the end piece of the pipe (2),
wherein the retaining element (3) is made from a material of greater hardness than the compression sleeve (1) and than the pipe (2), and wherein the retaining element (3) is reducible in its diameter at least partially by the force applied onto the pressing portion (6).

2. Crimp connection arrangement according to claim 1,
**characterised in**
**that** the retaining element (3) comprises a shape, which has a lower stability against the applied force onto the pressing portion (6) compared to a sleeve.

3. Crimp connection arrangement according to one of the preceding claims,
**characterised in**
**that** the retaining element (3) has the shape of a coil.

4. Crimp connection arrangement according to claim 3,
**characterised in**
**that** a cross-section of a winding of the coil corresponds to a circular cross-section.

5. Crimp connection arrangement according to claim 3,
**characterised in**
**that** a cross-section of a winding of the coil corresponds to a cross-section with edges.

6. Crimp connection arrangement according to one of the preceding claims,
**characterised in**
**that** the compression sleeve (1) comprises a conical portion (5) at the side where the pipe is inserted.

7. Crimp connection arrangement according to one of claims 3 to 6,
**characterised in**
**that** the coil comprises closed end windings (8) at both ends.

8. Crimp connection arrangement according to one of claims 3 to 7,
**characterised in**
**that** the side of the coil facing a sealing element (4) is closed and ground.

9. Crimp connection arrangement according to one of the preceding claims,
**characterised in**
**that** the retaining element (3) has the form of a wire mesh.

10. Crimp connection arrangement according to claim 9,
**characterised in**
**that** the wire forming the wire mesh has a generally round cross-section.

11. Crimp connection arrangement according to one of the preceding claims,
**characterised in**
**that** a sealing element (4) is connected to the retaining element (3).

12. Crimp connection arrangement according to one of the preceding claims,
**characterised in**
**that** the retaining element (3) is pre-assembled in the compression sleeve (1).

13. Crimp connection arrangement according to one of the preceding claims,
**characterised in**
**that** an inner diameter of the compression sleeve (1) is essentially constant across the pressing portion (6).
